Europäisches Patentamt

**European Patent Office**

**Office européen des brevets**

⑩

(11) Publication number: **0 049 621**

A2

(12) **EUROPEAN PATENT APPLICATION**

(21) Application number: 81304575.4

(22) Date of filing: 02.10.81

(51) Int. Cl.³: **B 65 G 47/08**
**B 21 D 43/28, B 21 B 43/04**
**B 23 Q 7/05**

(30) Priority: 03.10.80 US 193422

(43) Date of publication of application:
14.04.82 Bulletin 82/15

(84) Designated Contracting States:
AT BE DE FR GB IT LU NL SE

(71) Applicant: MORGAN CONSTRUCTION COMPANY
15 Belmont Street
Worcester Massachusetts 01605(US)

(72) Inventor: Klusmier, Kenneth
51 Holden Street
Worcester Massachusetts(US)

(74) Representative: Sanders, Peter et al,
Brookes & Martin High Holborn House 52/54 High
Holborn
Loncon WC1V 6SE(GB)

(54) Separating rods or bars in rolling mills.

㉗ A batch of rods (66) being delivered to a shearing device in a rolling mill is supported on a helical spring (48) extending transverse to the direction of movement of the rods. When the spring (48) is stretched by extending piston-cylinder units (56), the rods are separated by an amount substantially equal to the pitch of the grooves in the shear knives.

Fig 3.

EP 0 049 621 A2

- 1 -

TITLE:   SEPARATING RODS OR BARS IN   ROLLING MILLS

This invention relates generally to the handling of
elongate elements, and is concerned in particular with
a separating device for elements such as batched rods
or bars being fed to a shear in a rolling mill.

Bars or rods leaving the colling bed of a rolling mill
usually are gathered into batches which are then conveyed
longitudinally by a roller table (referred to as an
"approach" table) to a bar shear.  The bar shear has
knives with multiple grooves.  If the bars are allowed
to approach the shear without any preliminary alignment
or separation, they must be man-handled into the knife
grooves before the shearing operation can take place.
This is a laborious and time consuming operation which
decreases the production rate of the shear.

In an attempt at improving this situation, numerous
schemes have been proposed for assisting mill personnel
in the task of aligning and separating the rods or bars
in advance of the shear.  Examples of these prior attempts
include the use of grooved rollers, grooved combs (see U.S.
Patent No. 2,843,249) and magnetic fanning rolls (see U.S.
Patent Nos. 4,098,393; 2,939,568 and British Patent no.
297,320).  Grooved rollers or combs are unsatisfactory because they cannot be readily adapted to handle different
bar sizes and shapes. Magnetic fanning rolls are also
unsatisfactory because the amount of separation achieved
is not readily controllable, and also because such devices
leave a residue of magnetism in the rods or bars which
can be detrimental to subsequent operations.

The present invention has as its general objective the
provision of an improved separating device which is simple
in design yet highly effective in operation.

In accordance with the present invention there is provided
a method of laterally separating a plurality of elongate
elements arranged in side-by-side relationship, characterised by arranging the elongate elements on a transversely
extending support consisting of a plurality of contiguous
support elements, and axially extending the support such
that the support elements are laterally separated from
one another to provide a corresponding separation of the
elongate elements.

Preferably the support consists of a helical spring. When
used to separate the batched rods or bars prior to
shearing in a rolling mill, the spring extends transverse
to the direction of movement of the rods or bars along the
approach table. After a batch of rods or bars has been
brought to rest on the approach table, and the rod or bar
front ends have been aligned, the spring is raised from a
position spaced beneath the rods or bars to a position
supporting the rods or bars at a level above both the table
and the lower shear knife. The spring is then stretched
until the pitch of the rods or bars supported thereon
substantially matches the pitch of the knife grooves.
It will be appreciated that by simply varying the tension forces being applied to the spring, the spacing between the spring coils can be varied over a wide range to suit different rod or bar shapes and sizes. After the proper rod or bar pitch has been attained, the spring is lowered and the rods or bars are dropped into the knife grooves. The shearing operation then proceeds in the conventional manner.

In a preferred embodiment to be described hereinafter in more detail, the helical spring is axially inserted over a stiffener bar forming part of carrier frame. The carrier frame is located in advance of the shear between selected table rollers of the approach table. The carrier frame is mounted for pivotal movement about an axis parallel to the axis of the spring. A piston-cylinder unit is employed to pivot the frame when moving the spring between its raised and lowered positions. The frame also carries additional piston-cylinder units which act on opposite ends of the spring to control stretching and contraction.

Advantageously, before the rods or bars are separated, they are laterally packed and centrally located on the approach table at a location upstream from the helical spring.

In the accompanying drawings,

Figures 1A-1D are schematic plan views showing different operational stages of a separating device embodying the present invention;

Figure 2 is a sectional view on a greatly enlarged scale taken along line 2-2 of Figure 1C;

Figure 3 is a sectional view taken along line 3-3 of
Figure 2;

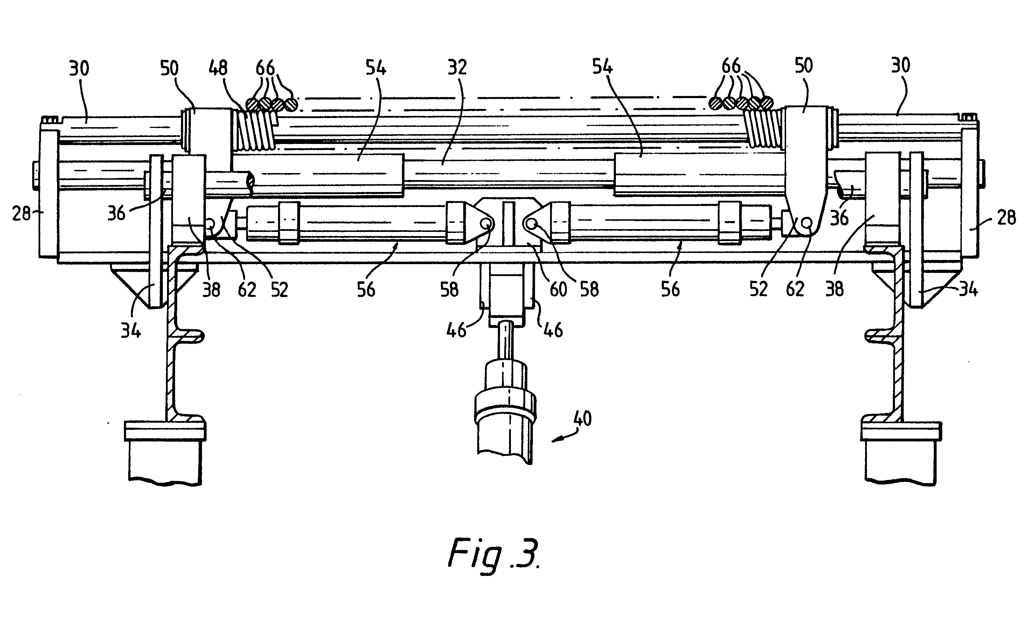

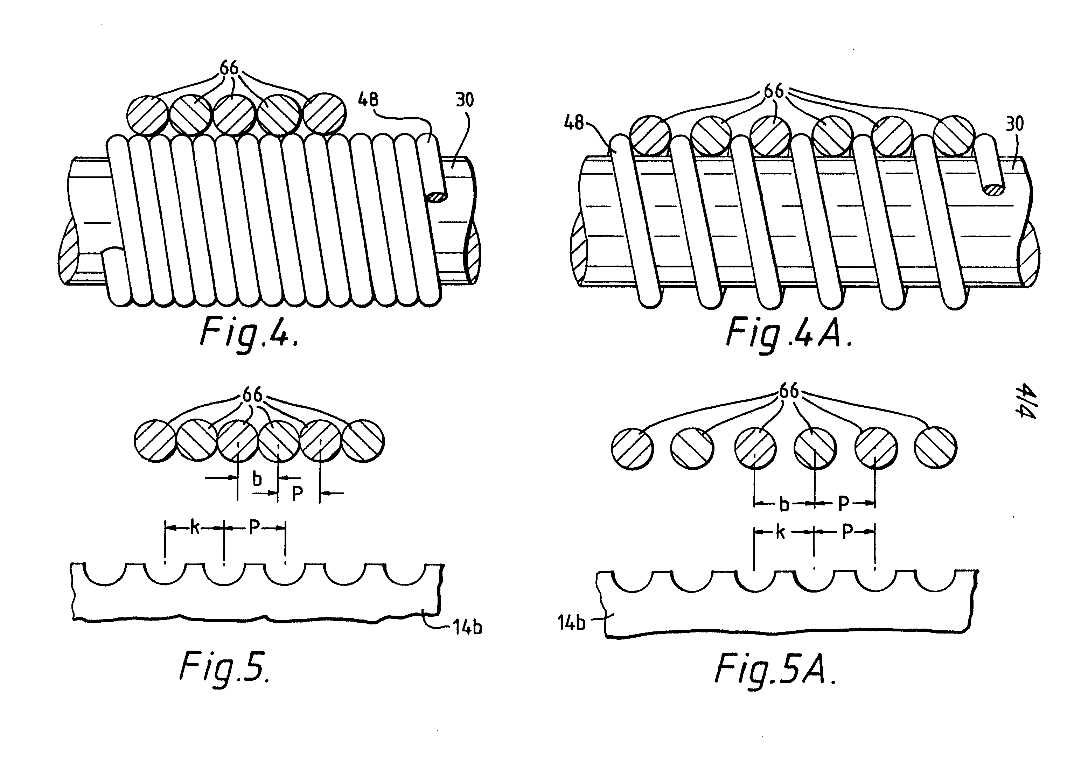

Figures 4 and 4A are sectional views taken along line
4-4 of Figure 3; and,

Figures 5 and 5A are sectional views taken along lines
5-5 of Figure 3.

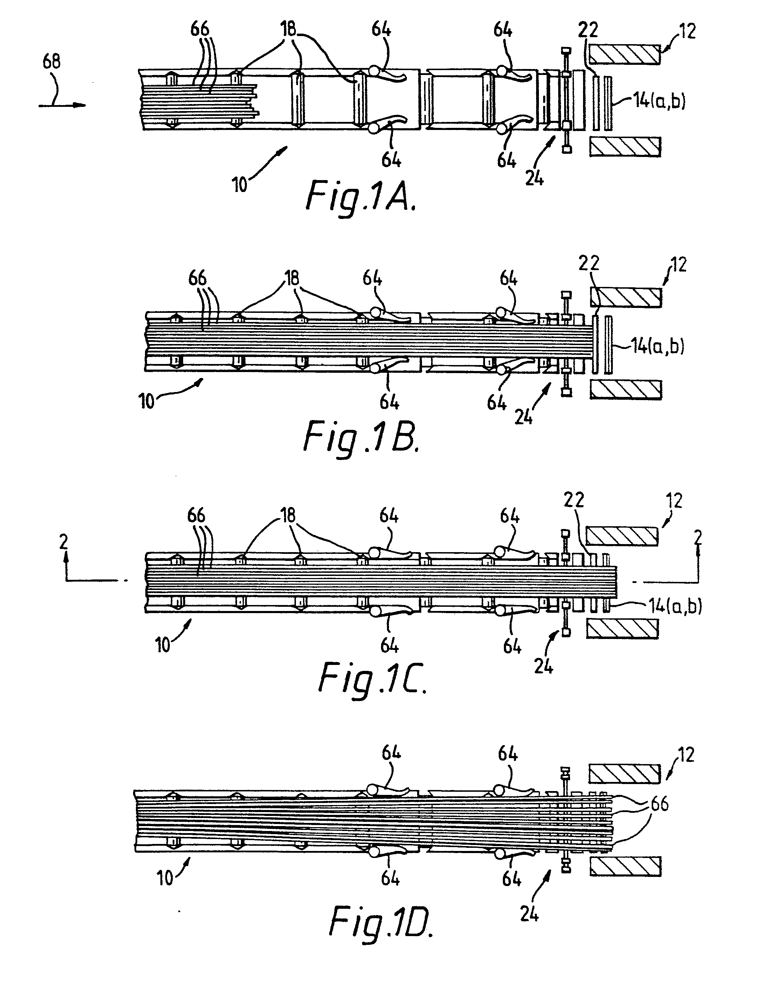

Referring initially to Figures 1A, 2 and 3, an approach
table 10 is shown leading to a bar shear 12. The bar
shear is of a conventional design employing upper and
lower shear knives 14a, 14b. As is best shown in Figures
5 and 5A, the shear knives have grooves 16 spaced to provide
a pitch "$P_k$".

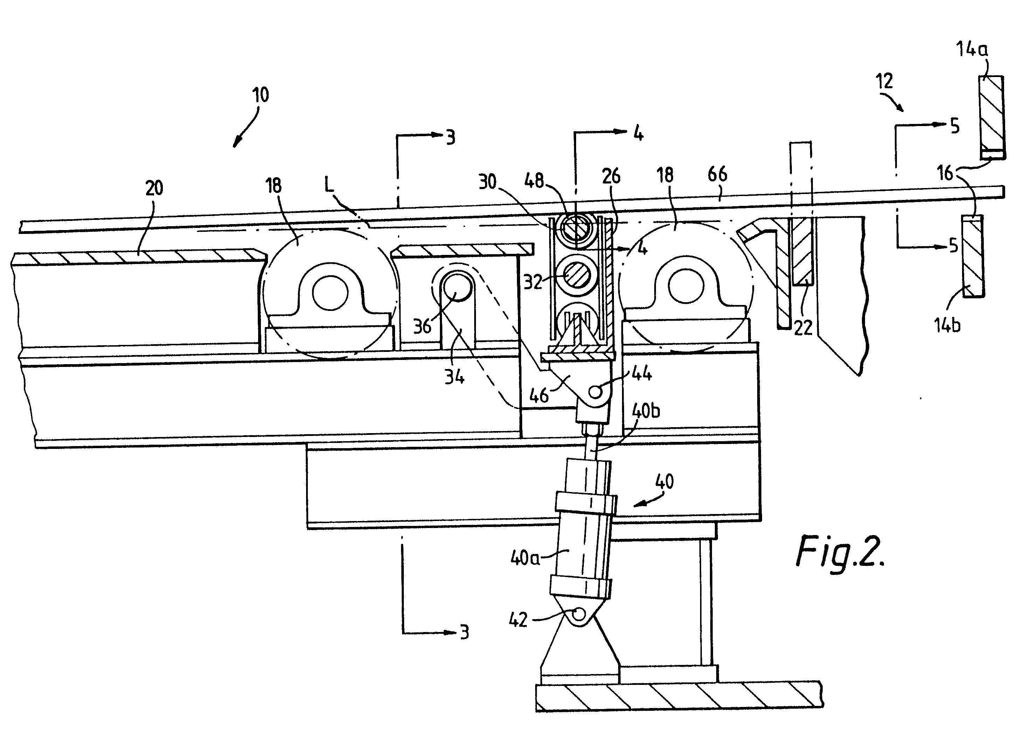

The approach table 10 is also of generally conventional
design with driven table rollers 18 establishing a support
level "L", and with fixed table plates 20 spanning the
gaps between the table rollers. A standard disappearing
stop 22 extends transversely across the approach table at
a location immediately upstream from the shear 12. The
stop is vertically adjustable by conventional means (not
shown) between a lowered position beneath the table
support level L and a raised position above the level L
as shown by the dot-dash lines in Figure 2.

A separating device generally indicated at 24 is located
in advance of the disappearing stop 22. As can be best
seen in Figures 2 and 3, the separating device includes
a carrier frame made up of a generally L-shaped plate 26,
end plates 28, a stiffener bar 30 extending between end
plates 28, and another guide bar 32 parallel to the
stiffener bar and also extending between end plates 28.

Arms 34 extend from the underside of plate 26 to a pivot shaft 36. Shaft 36 is parallel to bars 30 and 32, and is journalled for rotation in bearings 38 supported on the table substructure. A first piston-cylinder unit 40 has its cylinder 40a pivotally anchored as at 42 and its piston rod 40b pivotally connected as at 44 between ears 46 protruding from the underside of plate 26.

A helical spring 48 is axially inserted on the stiffener bar 30. The relationship between the inside diameter of the spring and the outside diameter of the stiffener bar is such that the spring may be freely extended and contracted. The ends of the spring 48 are connected to collars 50 slidably mounted on the stiffener bar 30. The collars 30 have depending ears 52 which are fixed to elongated guide sleeves 54 slidably mounted on the guide bar 32.

The carrier frame also carries a pair of second piston-cylinder units 56 having their cylinders 56a pivotally connected as at 58 to a central bracket 60 on plate 26. The piston rods 56b of these units are pivotally connected as at 62 to the lower ends of the depending ears 52.

At selected locations upstream from the spring 48, one or more sets of centering arms 64 are provided. These arms are pivotable by any convenient known means (not shown) between closed positions as shown in Figures 1A and 1B and open positions as shown in Figures 1C and 1D.

At the operational stage shown in Figure 1A, rods 66 arranged in side-by-side relationship in a batch are being conveyed longitudinally along the approach table 10 in the direction indicated by arrow 68. The piston-cylinder unit 40 has been adjusted to drop the carrier frame, thereby placing the helical spring 48 in a lowered
position beneath the support level L of the approach
table. The piston rods 56b of the piston-cylinder units
are retracted, and the helical spring 48 is in a contracted
state. The disappearing stop 22 is in the raised position,
and the centering arms 64 are closed.

A subsequent operational stage is shown in Figure 1B, where
the rods 66 have come to rest with their front ends aligned
against stop 22. The closed centering arms 64 have packed
the rods laterally, causing the batch to be centred on
the table 10. After the front ends have been aligned,
the stop 22 is dropped and the rods are advanced until
the front ends are between the stop and the shear knives
14a, 14b. The stop 22 is then raised again, and the rods
are advanced until the rod front end extends just beyond
the shear knives. Thereafter, the piston-cylinder unit
40 is operated to elevate the carrier frame, placing the
spring 48 in its raised position. The stop 22 is then fully
retracted, and the rods are deposited on the spring as
shown in Figures 1C, 2 and 3. The centering arms 64 are
then opened. At this stage, as shown in Figure 4, the rods
66 remain tightly packed on the spring 48. Also, as shown
in Figure 5, the pitch $P_b$ of the rods is at a minimum and
does not match the pitch $P_k$ of the grooves in the shear
knives.

The next operational stage is shown in Figure 1D. Here,
the pistons 56b of the piston-cylinder units 56 have
been extended to stretch the spring 48. As best can be
seen in Figure 4A, when the spring 58 is stretched, its
coils separate, causing the rods 66 to separate also.
The spring is stretched until, as shown in Figure 5A, the pitch $P_b$ of the rods substantially matches the pitch $P_k$ of the grooves in the shear knives 14a, 14b. At this point, the piston-cylinder unit 40 is again actuated to lower the spring 48, thus causing the rods to drop into respective grooves 16 in the lower shear knife 14b. The shearing operation may then continue in the conventional manner.

In light of the foregoing, it will now be appreciated by those skilled in the art that the present invention provides a simple yet highly effective means of laterally separating elongate elements. The invention is particularly suited for, although not limited in use to, the separation of rods or bars preliminary to a batch shearing operation by a shear of the type having grooved knives. By controlling the extent to which the spring is stretched, rods or bars of different sizes and cross sections can be spread to any desired pitch. If the desired bar pitch is not achieved with one full extension of the spring, the separating operation can be repeated. The present invention also makes it possible to automate a separating operation, or in the alternative to manually control the separation operation from a remote location, which is particularly advantageous in rod or bar mills because of the high temperature of the product.

CLAIMS

1. A method of laterally separating a plurality of elongate elements arranged in side-by-side relationship, characterised by arranging the elongate elements on a transversely extending support consisting of a plurality of contiguous support elements, and axially extending the support such that the support elements are laterally separated from one another to provide a corresponding separation of the elongate elements.

2. A method according to claim 1 in which the support comprises a helical spring.

3. A method according to claim 1 or claim 2 further comprising laterally packing the elements prior to the said arranging of the elements on the support.

4. Apparatus for handling a plurality of elongate elements arranged in side-by-side relationship and including means for laterally separating the elements from one another, characterised in that the separating means comprises an elongate support arranged transverse to the elements and consisting of a plurality of contiguous support elements, and means for axially extending the support such that the support elements are laterally separated from one another.

5. Apparatus according to claim 4 in which the support comprises a helical spring.

6. A rod or bar mill wherein batches of laterally arranged rods or bars are delivered longitudinally on an approach table to a shear, the shear having knives with multiple grooves adapted to cooperate in simultaneously cutting all of the rods or bars in a given batch, and the mill further including a rod or bar separating device for use
with the said shear, characterised in that the rod or
bar separating device comprises an elongate support
consisting of a plurality of contiguous support elements,
the support extending in a direction transverse to the
direction of longitudinal movement of the rods or bars
along the approach table; first operating means for
moving the support between a lowered position spaced
beneath the table and a raised position supporting the
rods or bars at a level above both the table and the lower
shear knife; and second operating means for axiallly
extending the support to laterally separate the support
elements by an amount which substantially matches the
pitch of the grooves in the shear knives.

7.   A rod or bar mill according to claim 6 wherein the
support comprises a helical spring and the first operating
means includes a carrier frame having a stiffener bar
extending axially through the helical spring, means
for mounting the carrier frame for pivotal movement about
an axis parallel to the spring, and a first piston-cylinder
unit for pivoting the frame about the said axis to move
the spring between its raised and lowered positions.

8.   A rod or bar mill according to claim 7 wherein the
second operating means includes brackets connected to
the spring at the opposite ends thereof, and a pair of
second piston-cylinder units carried on the frame and
connected to the brackets, the second piston-cylinder
units being operative to move the brackets in opposite
directions.

9.  A rod or bar mill according to claim 8 wherein the brackets include guide sleeves slidably mounted on the stiffener bar.

10. A rod or bar mill according to claim 9 wherein the carrier frame further includes a guide bar parallel to the stiffener bar, the brackets having additional guide sleeves slidably mounted on the guide bar.

1/4

0049621

Fig.1A.

Fig.1B.

Fig.1C.

Fig.1D.

Fig.2.

Fig.3.

0049621

*Fig.4.*

*Fig.4A.*

*Fig.5.*

*Fig.5A.*

4/4

0049621